Europäisches Patentamt

European Patent Office

Office européen des brevets

(19)

(11) Numéro de publication: **0 020 190**
**B1**

(12) **FASCICULE DE BREVET EUROPEEN**

(45) Date de publication du fascicule du brevet:
06.04.83

(51) Int. Cl.³: **B 60 K 11/04**

(21) Numéro de dépôt: **80400493.5**

(22) Date de dépôt: **14.04.80**

(54) **Dispositif de fixation pour radiateur dans un véhicule roulant, notamment pour radiateur de véhicule poids-lourd.**

(30) Priorité: **04.05.79 FR 7911294**

(43) Date de publication de la demande:
**10.12.80 Bulletin 80/25**

(45) Mention de la délivrance du brevet:
**06.04.83 Bulletin 83/14**

(84) Etats contractants désignés:
**BE DE GB IT NL SE**

(56) Documents cités:

FR-A-599 781
FR-A-1 413 650
FR-A-1 413 728
FR-A-1 600 374
US-A-4 137 982

(73) Titulaire: **SOCIETE ANONYME DES USINES CHAUSSON, 35, rue Malakoff, F-92601 Asnieres Cedex Hauts-de-Seine (FR)**

(72) Inventeur: **Moranne, Jean-Pierre, Résidence Leclerc, F-95130 Franconville, Val d'Oise (FR)**

(74) Mandataire: **Madeuf, Claude Alexandre Jean et al, CABINET MADEUF 3, avenue Bugeaud, F-75116 Paris (FR)**

## Dispositif de fixation pour radiateur dans un véhicule roulant, notamment pour radiateur de véhicule poids-lourd

La présente invention concerne le montage de radiateurs, notamment de radiateurs de refroidissement, dans des véhicules poids-lourds destinés à être exploités dans des conditions sévères, par exemple sur des véhicules destinés à rouler sur des pistes.

Il a été constaté que le châssis des véhicules roulant sur des pistes ou autres terrains peu ou non préparés est soumis à des torsions et il arrive que ces efforts de torsion soient transmis aux organes de suspension du ou des radiateurs et provoquent des dommages à ces derniers.

Pour remédier à cela, on a proposé des suspensions élastiques pour les radiateurs et il a même déjà été envisagé par la Demanderesse de monter les radiateurs à l'intérieur d'un berceau ou d'une ceinture en reliant le radiateur à cette ceinture par des fixations rigides et localisées, par exemple par des goujons, des plots ou autres organes analogues.

Le brevet US-A-4 137 982 a, par ailleurs, fait connaître une disposition dans laquelle un berceau est prévu pour fixer le radiateur et dans laquelle des cales élastiques sont interposées entre les boîtes à eau du radiateur et les parties correspondantes du berceau pour réduire un écoulement indésirable de l'air entre le faisceau et les boîtes à eau.

L'invention concerne, en conséquence, un nouveau dispositif qui permet de remédier aux inconvénients constatés et de protéger très efficacement le radiateur qui, de plus, peut être réalisé de façon particulièrement bon marché.

Conformément à l'invention, le dispositif de fixation élastique pour radiateur dans un véhicule roulant, notamment pour véhicule poids-lourd, ce dispositif comportant un berceau pour fixer le radiateur et des cales élastiques interposées entre les boîtes à eau de radiateur et les parties correpondantes du berceau (US-A-4 137 982) est caractérisé en ce que le berceau entoure complètement le radiateur de façon que lesdites cales élastiques sont maintenues sous contrainte pour exercer un effort de compression permanent sur le radiateur.

Une forme de réalisation de l'objet de l'invention est représentée, à titre d'exemple non limitatif, au dessin annexé.

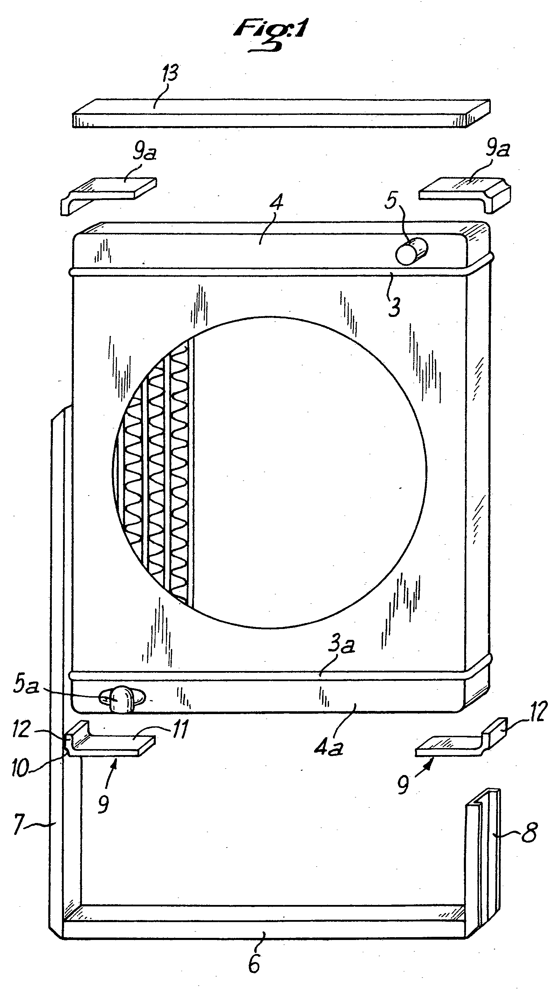

La fig. 1 est une perspective schématique éclatée d'un radiateur et de son berceau de support faisant application de l'invention.

La fig. 2 est une élévation partielle, à plus grande échelle, en partie arrachée, illustrant un détail de réalisation.

Au dessin, est représenté de façon schématique un radiateur de refroidissement pour véhicules, notamment pour poids-lourd, qui comporte des tubes 1 et des dissipateurs. Les tubes débouchent dans des collecteurs 3, 3a qui sont recouverts par des boîtes à eau 4, 4a munies de tubulures telles que celles figurées en 5 et 5a.

Dans l'exemple représenté, le radiateur proprement dit ne comporte pas de joues latérales, c'est-à-dire que les collecteurs et boîtes à eau sont seulement reliés par les tubes 1. On ne sortirait cependant pas du cadre de l'invention si le radiateur comportait des joues latérales pour relier les petits côtés des collecteurs ou des boîtes à eau.

Le radiateur décrit ci-dessus est destiné à être monté dans un berceau qui comporte une semelle 6, par exemple constituée par un profilé en U, et qui est réunie par ses extrémités à des montants 7 et 8 également constitués par des profilés par exemple en U.

Le radiateur est inséré entre les deux montants 7 et 8 et il repose sur la semelle 6 par l'intermédiaire de cales élastiques 9, par exemple en caoutchouc, qui, dans l'exemple illustré, présentent sensiblement la forme d'une équerre dans l'angle externe de laquelle une encoche 10 est formée pour que seules les branches de l'équerre portent, d'une part, contre la semelle 6 et, d'autre part, contre la paroi interne des montants 7, 8.

La face interne 11 de l'équerre est conformée de façon complémentaire à la partie de la paroi correspondante de la boîte à eau 4a. Les cales élastiques 9 peuvent être pleines ou au contraire alvéolées, par exemple présenter des nervures s'étendant dans plusieurs directions pour réaliser un croisillonnement.

Lors de l'insertion du radiateur entre les montants 7, 8, le petit côté 12 de chaque cale en forme d' équerre est serré contre la paroi des montants 7 et 8. Après insertion complète du radiateur entre les montants, on dispose de façon analogue à ce qui vient d'être décrit d'autres cales 9a identiques aux précédentes qui enveloppent les extrémités de la boîte à eau 4. Un couvercle 13 est ensuite mis en place entre l'extrémité des montants 7, 8.

Le couvercle 13 est mis en place tout en exerçant sur lui une pression faisant déformer le grand côté des cales 9a et 9 et, ensuite, le couvercle 13 est fixé aux montants 7, 8 du berceau, par exemple par des goussets 14 qui sont reliés aux montants 7, 8 par des points de soudure 15 et au couvercle 13 par des boulons ou des broches 16. Ainsi, lorsque le couvercle est en place, le radiateur est maintenu sous une contrainte permanente de compression.

On choisit l'élasticité des cales 9, 9a compte tenu de la masse du radiateur proprement dit et on fait exercer sur les cales une force de compression telle que la fréquence propre du radiateur pincé entre les différentes cales élastiques soit toujours supérieure aux fréquences pouvant être produites par le roulement du véhicule qui comporte le radiateur.

Dans la plupart des cas, il importe donc que la fréquence propre du radiateur soit supérieure à 1 hz, mais de préférence la contrainte de compression qui est exercée est choisie pour que cette fréquence propre soit très supérieure, par exemple voisine de 30 hz.

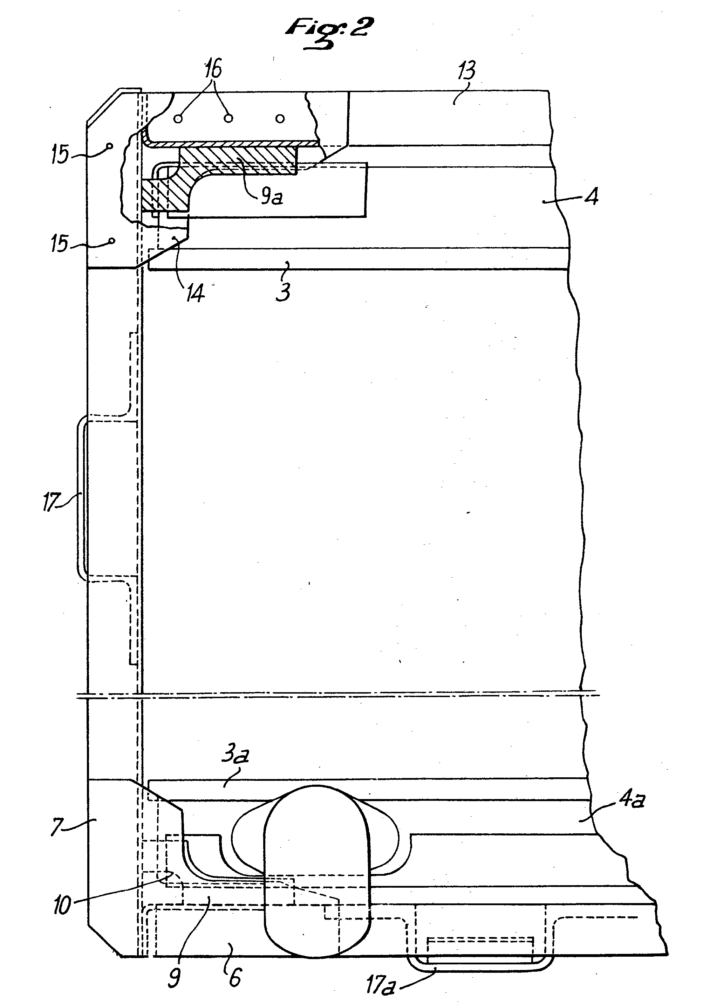

Le berceau, qui est constitué par la semelle 6, les montants 7, 8 et le couvercle 13, est utilisé pour fixer le radiateur au véhicule proprement dit par des moyens habituels et, à cette fin, comme l'illustre la fig. 2, il comporte des pattes de fixation 17, 17a portées par les montants, la semelle et éventuellement le couvercle.

Dans ce qui précède, il a été expliqué que les cales élastiques étaient constituées par des pièces en caoutchouc ou matière analogue mais on ne sortirait pas du cadre de l'invention en les réalisant d'autres manières, par exemple par des ressorts métalliques interposés entre la boîte à eau inférieure et la semelle, d'une part, et entre la boîte à eau supérieure et le couvercle 13, d'autre part. De même, il est possible de combiner des cales en caoutchouc et des ressorts.

L'invention n'est par limitée à l'exemple de réalisation, représenté et décrit en détail, car diverses modifications peuvent y être apportées sans sortir de son cadre selon les revendications.

**Revendications**

1. Dispositif de fixation élastique pour radiateur dans un véhicule roulant, notamment pour véhicule poids-lourd, ce dispositif comportant un berceau pour fixer le radiateur et des cales élastiques (9, 9a) interposées entre les boîtes à eau du radiateur et les parties correspondantes du berceau, caractérisé en ce que le berceau (6, 7, 8, 13) entoure complètement le radiateur de façon que lesdites cales élastiques (9, 9a) sont maintenues sous contrainte pour exercer un effort de compression permanent sur le radiateur.

2. Dispositif suivant la revendication 1, caractérisé en ce que l'élasticité des cales (9, 9a) et l'effort de compression sont choisis pour que la fréquence propre du radiateur maintenue à l'intérieur du berceau (6, 7, 8, 13) soit réglée pour être supérieure à 1 hz, de préférence de l'ordre de 30 hz, et de toute façon supérieure aux fréquences engendrées par le roulement du véhicule.

3. Dispositif suivant l'une des revendications 1 et 2, caractérisé en ce que les cales élastiques (9%, 9a) sont constituées en caoutchouc ou matière analogue.

4. Dispositif suivant l'une des revendications 1 à 3, caractérisé en ce que les cales élastiques (9, 9a) sont constituées par des pièces moulées en caoutchouc présentant sensiblement la forme d'une équerre pour prendre appui, d'une part, contre une semelle (6) et un couvercle (13) du berceau et, d'autre part, contre des montants (7, 8) du berceau.

5. Dispositif suivant l'une des revendications 1 à 4, caractérisé en ce que les cales (9, 9a) en forme d'équerre présentent une encoche (10) à l'aplomb de leur angle externe.

6. Dispositif suivant l'une des revendications 1 à 5, caractérisé en ce que les cales élastiques (9, 9a) sont conformées pour épouser la forme d'une partie des boîtes à eau du radiateur et présentent au moins en partie une structure alvéolée.

7. Dispositif suivant l'une des revendications 1 à 6, caractérisé en ce que le radiateur est muni de joues latérales.

**Patentansprüche**

1. Vorrichtung zur Befestigung eines Wärmetauschers in einem Strassentransportfahrzeug, insbesondere in einem Schwerlastwagen, wobei der Wärmetauscher federnd in einem Fahrzeugrahmen angebracht ist, dadurch gekennzeichnet, dass sie einen Unterrahmen (6, 7, 8, 13) aufweist, welcher den Wärmetauscher umschliesst, sowie federnde Unterlegteile (9, 9a) zwischen den Wasserkästen (4, 4a) des Wärmetauschers und den entsprechenden Abschnitten des Unterrahmens, und dass die federnden Unterlegteile (9, 9a) so beaufschlagt gehalten sind, dass der Wärmetauscher ununterbrochen unter Druckspannung steht.

2. Vorrichtung nach Anspruch 1, dadurch gekennzeichnet, dass die Spannkraft der Unterlegteile (9, 9a) und die Druckspannung so gewählt sind, dass die Eigenfrequenz des Wärmetauschers, der in den Unterrahmen eingesetzt ist, so steuerbar ist, dass sie mehr als 1 Hz, vorzugsweise um 30 Hz, beträgt, und in jedem Fall höher als die durch den Betrieb des Kraftfahrzeugs erzeugten Frequenzen ist.

3. Vorrichtung nach einem der vorhergehenden Ansprüche, dadurch gekennzeichnet, dass die federnden Unterlegteile (9, 9a) aus Kautschuk oder dergleichen bestehen.

4. Vorrichtung nach einem der vorhergehenden Ansprüche, dadurch gekennzeichnet, dass die federnden Unterlegteile (9, 9a) aus Kautschukformteilen bestehen, die im wesentlichen winkelförmig und so ausgebildet sind, dass sie einerseits gegen eine Fussplatte (6) und eine Abdeckung (13) des Unterrahmens und andererseits gegen die senkrechten Stützteile (7, 8) des Unterrahmens anliegen.

5. Vorrichtung nach einem der vorhergehenden Ansprüche, dadurch gekennzeichnet, dass die winkelförmigen Unterlegteile (9, 9a) eine Aussparung (10) senkrecht zu ihrem Aussenwinkel aufweisen.

6. Vorrichtung nach einem der vorhergehenden Ansprüche, dadurch gekennzeichnet, dass die federnden Unterlegteile (9, 9a) so geformt (11) sind, dass sie gegen die Fläche eines Teils der Wasserkästen (4, 4a) des Wärmetauschers anliegen und zumindest teilweise einen zelligen Aufbau aufweisen.

7. Vorrichtung nach einem der Ansprüche 1 bis 6, dadurch gekennzeichnet, dass der Wärmetauscher seitliche Wangenteile aufweist.

**Claims**

1. Resilient fixation device for a radiator in a running vehicle, especially for heavy-weight vehicle, this device comprising a cradle for fixing the radiator and resilient wedges (9, 9a) interposed between the header boxes of the radiator and the corresponding portions of the cradle, characterized in that the cradle (6, 7, 8, 13) surrounds completely the radiator so that said resilient wedges (9, 9a) are maintained under stress in order to exert a permanent compression effort on the radiator.

2. Device according to claim 1, characterized in that the resiliency of the wedges (9, 9a) and the compression effort are chosen such that the natural frequency of the radiator maintained inside the cradle (6, 7, 8, 13) is set so as to exceed 1 Hz, preferably in the order of 30 Hz, and in any case higher than the frequencies generated by the running of the vehicle.

3. Device according to one of claims 1 and 2, characterized in that the resilient wedges (9, 9a) are made of rubber or similar material.

4. Device according to one of claims 1 to 3, characterized in that the resilient wedges (9, 9a) are made of moulded rubber parts having substantially the shape of a square in order to come to bear, on the one hand, against a sole (6) and a cover (13) of the cradle, and, on the other hand, against uprights (7, 8) of the cradle.

5. Device according to one of claims 1 to 4, characterized in that the square shaped wedges (9, 9a) have a notch (10) uprightly to their outer angle.

6. Device according to one of claims 1 to 5, characterized in that the resilient wedges (9, 9a) are shaped to mate the shape of a portion of the header boxes of the radiator and exhibit, in part at least, an alveolate structure.

7. Device according to one of claims 1 to 6, characterized in that the radiator is provided with side flanges.

0 020 190

## Fig:1

5

## Fig. 2